# EUROPÄISCHE PATENTSCHRIFT

(11) **EP 1 991 436 B1**
(45) Veröffentlichungstag und Bekanntmachung des Hinweises auf die Patenterteilung: **23.06.2010**
(21) Anmeldenummer: 07721967.3
(22) Anmeldetag: 27.02.2007
(51) Int. Cl.: B60J 7/05, B60J 7/185

(54) **VERSTELLVORRICHTUNG FÜR EINEN SCHIEBEDACHDECKEL AN EINEM FAHRZEUG**
ADJUSTMENT DEVICE FOR A SLIDING ROOF COVER ON A VEHICLE
DISPOSITIF DE REGLAGE POUR UN COUVERCLE DE TOIT OUVRANT D'UN VEHICULE

(30) Priorität: 08.03.2006 DE 102006010755
(43) Veröffentlichungstag der Anmeldung: 19.11.2008
(73) Patentinhaber: Webasto AG, 82131 Stockdorf (DE)
(72) Erfinder: FÄRBER, Manfred, Wielenbach (DE)
(86) Internationale Anmeldenummer: PCT/DE2007/000366
(87) Internationale Veröffentlichungsnummer: WO 2007/101425

(56) Entgegenhaltungen:
- DE-A1- 3 715 268
- DE-C1- 10 009 387
- DE-C1- 10 039 150
- JP-A- 2002 012 037

## Beschreibung

Die vorliegende Erfindung betrifft eine Verstellvorrichtung für einen Schiebedachdeckel an einem Fahrzeug gemäß des Oberbegriffs des Anspruchs 1.

Eine derartige Verstellvorrichtung ist beispielsweise aus der DE 100 09 387 C1 bekannt.

Bei der bekannten Vorrichtung kann der Schiebedachdeckel ausgehend von einer Schließstellung um eine vordere Schwenkachse nach außen ausgestellt und sodann nach hinten verfahren werden, um eine Dachöffnung freizugeben. An beiden Seiten des Deckels, auf dessen Unterseite, ist jeweils ein Deckelhalter angeordnet, der mit zwei in Fahrzeuglängsrichtung hintereinander angeordneten, die Bewegung des Deckels steuernden Gleitern gekoppelt ist, die in einer in Fahrzeuglängsrichtung verlaufenden fahrzeugfesten Führungsschiene geführt sind. Ein erster der beiden Gleiter ist als antreibbarer Schlitten entlang der Führungsschiene bewegbar und nimmt über einen Teil seines Bewegungsbereiches einen von einem Gleitzapfen und einem Steuerhebel gebildeten zweiten Gleiter mit, wohingegen der erste Gleiter über einen anderen Teil seines Bewegungsbereiches den zweiten Gleiter in einer vorgegebenen Position entlang der Führungsschiene zurücklässt. Der Steuerhebel des zweiten Gleiters wird durch eine Kulissenkopplung zwischen den beiden Gleitern gesteuert derart verschwenkt, dass ein am Steuerhebel angeordneter Verriegelungszapfen beim Zurücklassen des zweiten Gleiters durch eine Höhenverstellung in eine Führungsschienenaussparung gebracht wird, um den zweiten Gleiter an der Führungsschiene zu arretieren.

Die Arretierung des zweiten Gleiters wird dadurch gesichert, dass die Kulissenkopplung über den entsprechenden Teil des Bewegungsbereiches des ersten Gleiters aufrechterhalten wird.

Diese Methode der Verriegelung der Arretierung besitzt den Nachteil, dass bei zurückgelassenem zweiten Gleiter eine Kulissenkopplung zwischen den beiden Gleitern aufrechterhalten werden muss, was insbesondere dann einen erhöhten konstruktiven Aufwand bedeutet, wenn nach Arretierung des zweiten Gleiters ein vergleichsweise großer Verstellweg des ersten Gleiters gewünscht ist. Unabhängig davon ist diese Art der Verriegelung der Arretierung mit ungünstigen Kraftmomenten verbunden, die beispielsweise die Leichtgängigkeit der Gleiterbewegung nachteilig beeinträchtigen können.

Ähnliche Verstellvorrichtungen sind beispielsweise aus der DE 37 15 268 A1 und der DE 100 39 150 C1 bekannt.

Auch bei diesen bekannten Vorrichtungen wird einer von zwei in einer Führungsschiene laufenden Gleitern durch den anderen Gleiter gesteuert arretiert, wozu ein Arretierelement in eine Führungsschienenaussparung verschwenkt wird und zum Entriegeln wieder herausverschwenkt wird. Bei der erstgenannten Veröffentlichung ist das Arretierelement durch eine Feder in Verriegelungsrichtung vorbelastet, bei der zweitgenannten Veröffentlichung durch eine Feder in Entriegelungsrichtung vorbelastet.

Wenngleich durch solche Vorbelastungen der Verriegelungsvorgang oder der Entriegelungsvorgang vereinfacht werden kann bzw. durch eine solche Vorbelastung auch die Arretierung oder Freigabe des zweiten Gleiters (durch die Federkraft) gesichert werden kann, so halten derartige konstruktive Lösungen insbesondere auf Grund von Ermüdungserscheinungen in der Regel keinen längeren Betriebsdauern stand und es können sich Fehlfunktionen ergeben. Letzterem Problem könnte zwar durch Vorsehen einer entsprechend groß dimensionierten Feder begegnet werden. Dies führt jedoch wiederum zwangsläufig zu größeren Betätigungskräften im Betrieb der Vorrichtung, was wiederum einen erhöhten konstruktiven Aufwand im Hinblick auf die mechanische Stabilität der Vorrichtungskomponenten nach sich zieht.

Zusammenfassend müssen die bekannten Mechaniken zum Arretieren und Freigeben des betreffenden Gleiters bzw. zum Sichern (Verriegeln) und Entsichern (Entriegeln) der Arretierung ungünstige Kräfte aufnehmen oder übertragen Kräfte in einer Weise auf andere Komponenten der Verstellvorrichtung, welche die Gleiterbewegungen nachteilig beeinträchtigen kann.

Es ist daher eine Aufgabe der vorliegenden Erfindung, eine Verstellvorrichtung der eingangs genannten Art bereitzustellen, bei welcher ungünstige Kräfte im Zusammenhang mit der Arretierung und Freigabe des zweiten Gleiters vermieden werden können.

Diese Aufgabe wird gelöst durch eine Verstellvorrichtung mit den Merkmalen des Anspruchs 1. Die abhängigen Ansprüche betreffen vorteilhafte Weiterbildungen der Erfindung.

Bei der erfindungsgemäßen Verstellvorrichtung ist am zweiten Gleiter ein durch den ersten Gleiter gesteuert um eine Hochachse drehbarer Drehriegel angeordnet, welcher beim Zurücklassen des zweiten Gleiters, nach der Höhenverstellung des Arretierelements, in eine die Arretierung verriegelnde Drehstellung gedreht wird.

Damit ist eine einfache und funktionssichere Verriegelung (und Entriegelung) der Arretierung geschaffen. Die Funktionssicherheit der erfindungsgemäßen Lösung beruht darauf, dass eine z. B. durch Vibrationen oder Stöße verursachte Kraftbeaufschlagung des Arretierelements in Hochrichtung durch den Drehriegel sicher (zur Vermeidung einer Bewegung des Arretierelements) aufgenommen werden kann und darüber hinaus den Drehriegel allenfalls parallel zu seiner Drehachse belastet, nicht jedoch ein drehendes Kraftmoment auf den Drehriegel ausübt.

Darüber hinaus kann der Drehriegel ohne weiteres in Verriegelungsdrehrichtung und/oder Entriegelungsdrehrichtung ohne nennenswerte Kraftbeaufschlagung (z. B. durch Reibkräfte) betätigbar (verschwenkbar) vorgesehen werden.

Bei bekannten Vorrichtungen direkt aus dem Arretierungsmechanismus auf die Verriegelungsmechanik eingeleitete und somit ungünstige Kräfte können bei der Erfindung vorteilhaft vermieden werden. Die bei der Sicherung der Arretierung und Freigabe wirkenden Kräfte können bei der Erfindung gewissermaßen von den bei der Betätigung des Drehriegels wirkenden Kräften "entkoppelt" werden. Die zum Sichern der Arretierung erforderlichen Gegenkräfte können vorteilhaft durch den in seine Verriegelungsdrehstellung verdrehten Drehriegel aufgenommen werden. Sie werden somit von den übrigen Komponenten der Verstellvorrichtung ferngehalten.

Eine bevorzugte Anwendung der Erfindung ist die Verstellung eines Schiebedachdeckels, der in einer Schließstellung eine Dachöffnung verschließt, in eine Ausstelllage ("Lüftungsstellung") hochschwenkbar ist und dann zurückgeschoben werden kann. Dies ist z. B. der Fall bei so genannten Spoilerdächern oder außen laufenden Schiebedächern. Die Verstellvorrichtung ist jedoch gleichermaßen z. B. für Schiebedächer geeignet, bei denen der Deckel ausgehend von der Schließstellung alternativ oder zusätzlich zur Hochschwenkung abgesenkt und dann zurückgeschoben werden kann. Für die Erfindung wesentlich ist in diesem Zusammenhang lediglich, dass zwei entlang einer Führungsschiene bewegbare Gleiter zur Steuerung der (an sich beliebig gestaltbaren) Schiebedachdeckelbewegung vorgesehen sind und eine Mitnahmekopplung zwischen den Gleitern lediglich über einen Teil des Bewegungsbereiches des einen der beiden Gleiter ("erster Gleiter") besteht.

Die Längsrichtung, in welcher sich die fahrzeugfeste Führungsschiene erstreckt, ist die "Schieberichtung" des Schiebedachdeckels. Üblicherweise ist diese Längsrichtung identisch mit der Längsrichtung des betreffenden Fahrzeugs.

In an sich bekannter Weise kann wenigstens einer der beiden Gleiter zumindest mittelbar mit dem Schiebedachdeckel oder einem den Deckel tragenden Deckelträger verbunden sein. Der Deckel bzw. Deckelträger kann z. B. durch Ausstellhebel, Hubkulissen etc. mit den Gleitern verbunden sein.

Die den ersten Gleiter entlang der Führungsschiene bewegende Antriebseinrichtung kann in an sich bekannter Weise z. B. ein in Mitnahmeverbindung zu dem ersten Gleiter stehendes, drucksteifes Antriebskabel umfassen, welches an oder in der Führungsschiene in Längsrichtung verlaufend geführt ist.

In einer bevorzugten Ausführungsform weist der Drehriegel eine radial abstehende Riegelnocke auf, die zum Verriegeln in einen durch die Höhenverstellung geschaffenen Freiraum zwischen einem mit dem Arretierelement verbundenen Abschnitt des zweiten Gleiters und einem Abschnitt der Führungsschiene schwenkt. Bevorzugt ist dieser Freiraum bzw. die dort hinein schwenkende Riegelnocke hierbei so bemessen, dass die Verschwenkung im Wesentlichen ohne nennenswerte Kraftbeaufschlagung (z. B. durch Reibungskräfte) erfolgt. Dasselbe gilt für das Herausschwenken der Riegelnocke aus dem Freiraum im Falle der Entriegelung der Arretierung. Bevorzugt wird die Riegelnocke in Axialrichtung (Hochrichtung) von zwei im Wesentlichen orthogonal zur Axialrichtung sich erstreckenden Riegelnockenflächen begrenzt, an denen im verriegelten Zustand einerseits der betreffende Abschnitt des zweiten Gleiters und andererseits der betreffende Abschnitt der Führungsschiene (bevorzugt ebenfalls mit horizontalen Anschlagflächen) anliegen.

Für eine konstruktiv einfache Ansteuerung der Drehung des Drehriegels ist es von Vorteil, wenn der Drehriegel zwei radial abstehende, zueinander winkelversetzte Steuernocken aufweist, mit denen ein seitlich abstehender Steuerbolzen des ersten Gleiters zum Drehen des Drehriegels zusammenwirkt. Für eine kompakte Bauform ist es hierbei wiederum von Vorteil, wenn die beiden Steuernocken auf axial gleicher Höhe am Drehriegel angeordnet sind. Falls hierbei die oben erwähnte Riegelnocke vorgesehen ist, so ist diese bevorzugt axial versetzt zu den beiden Steuernocken am Drehriegel angeordnet.

In einer bevorzugten Ausführungsform ist der Drehriegel als Kunststoffformteil (z. B. Spritzgussteil) gefertigt. Dies ist insofern unproblematisch, als diese Komponente bei deren Betätigung (Drehung) nicht nennenswert belastet werden muss und die "Verriegelungskraft" den Drehriegel lediglich auf axialen Druck belastet.

Der oben erwähnte Steuerbolzen des ersten Gleiters kann neben der Betätigung des Drehriegels bei der erfindungsgemäßen Verstellvorrichtung weitere Funktionen besitzen. So ist gemäß einer Weiterbildung vorgesehen, dass der Steuerbolzen des ersten Gleiters mit einer Kulissenbahn eines mit dem Arretierelement verbundenen Abschnitts des zweiten Gleiters zusammenwirkt, um die Höhenverstellung zu bewirken. Wenn an wenigstens einem Ende einer solchen Kulissenbahn ein Anschlag für den Steuerbolzen vorgesehen ist, so kann der Steuerbolzen darüber hinaus vermittels dieses Anschlags die Mitnahmekopplung zwischen den beiden Gleitern bewirken.

In einer Ausführungsform der Erfindung ist vorgesehen, dass der Drehriegel in seiner Verriegelungsdrehstellung und/oder seiner Entriegelungsdrehstellung durch eine Federbelastung gesichert ist. Erwähnenswert ist in diesem Zusammenhang, dass eine solche Federbelastung im Gegensatz zu den eingangs mit Bezug auf den Stand der Technik erwähnten Federbelastungen vorteilhaft äußerst gering bemessen sein kann, da sämtliche im Betrieb im Sinne einer Drehung des Drehriegels auf diesen wirkende Kräfte sehr klein vorgesehen sein können.

In einer Ausführungsform ist vorgesehen, dass der erste Gleiter nach dem Zurücklassen des zweiten Gleiters vollständig vom zweiten Gleiter entkoppelt wird. Wenn der erste Gleiter z. B. über eine Kulissenkopplung mit dem zweiten Gleiter gekoppelt ist, so kann die vollständige Entkoppelbarkeit dadurch vorgesehen sein, dass die betreffende Kulissenbahn an einem Ende "offen" ist, so dass an dieser Stelle eine Entkopplung erfolgen kann und der erste Gleiter bei zurückgelassenem zweiten Gleiter im Prinzip beliebig weit bewegt werden kann.

In einer vorteilhaften Ausführungsform ist vorgesehen, dass der erste Gleiter mit einem seitlich abstehenden Steuerbolzen in einer einseitig offenen Kulissenbahn (z. B. Kulissenschlitz) läuft, die am zweiten Gleiter, insbesondere an einem Abschnitt des zweiten Gleiters vorgesehen ist, der mit dem höhenverstellbaren Arretierelement verbunden ist.

In einer Ausführungsform ist das Arretierelement an einem um eine Querachse verschwenkbaren Arretierhebel des zweiten Gleiters angeordnet. Die Höhenverstellung des Arretierelements kann dann durch eine Verschwenkung des Arretierhebels bewirkt werden, wobei für eine große Höhenverstellung bei vorgegebenem Verschwenkwinkel die Anordnung des Arretierelements im Bereich des freien Endes des Arretierhebels bevorzugt ist.

In einer bevorzugten Ausführungsform ist vorgesehen, dass das Arretierelement seitlich vom zweiten Gleiter absteht und während der Mitnahme des zweiten Gleiters in einem durch einen horizontalen Führungsschienensteg begrenzten Führungskanal der Führungsschiene läuft und bei Erreichen der vorbestimmten Position durch die Höhenverstellung in eine Aussparung des Führungsschienenstegs eindringt.

Die Erfindung wird nachfolgend anhand eines Ausführungsbeispiels mit Bezug auf die beigefügten Zeichnungen näher erläutert. Es stellen dar:
- Fig. 1: eine Seitenansicht einer Verstellvorrichtung für einen Schiebedach- deckel, wobei die Situation für die Schließstellung des Deckels dargestellt ist,
- Fig. 2: eine Seitenansicht ähnlich Fig. 1, jedoch für eine erste Zwischen- stellung (im Verlauf eines Dachöffnungsvorganges),
- Fig. 3: eine Seitenansicht ähnlich Fig. 1, jedoch für eine zweite Zwischen- stellung,
- Fig. 4: eine perspektivische Ansicht der Situation gemäß Fig. 3,
- Fig. 5: eine perspektivische Ansicht ähnlich Fig. 4, jedoch für eine dritte Zwischenstellung,
- Fig. 6: eine horizontale Schnittansicht längs der Linie VI-VI in Fig. 5,
- Fig. 7: eine perspektivische Ansicht ähnlich der Fig. 5, jedoch für eine vierte Zwischenstellung,
- Fig. 8: eine der Fig..6 entsprechende Schnittansicht, jedoch für eine fünfte Zwischenstellung,
- Fig. 9: eine perspektivische Ansicht ähnlich Fig. 5, jedoch für die fünfte Zwischenstellung,
- Fig.10: eine Querschnittsansicht zur Veranschaulichung des entriegelten Zustands der Gleiterarretierung, wie er z. B. in den Situationen gemäß der Fig. 1 bis 6 vorliegt,
- Fig. 11: eine Querschnittsansicht ähnlich Fig. 10, jedoch für den verriegelten Zustand der Gleiterarretierung, wie er z. B. für die Situationen gemäß der Fig. 8 und 9 vorliegt,
- Fig. 12: eine Explosionsdarstellung einiger für die Verriegelungsmechanik wesentlicher Vorrichtungskomponenten, und
- Fig. 13: eine perspektivische Darstellung zur Veranschaulichung einer Ab- wandlung der in Fig. 12 gezeigten Mechanik.

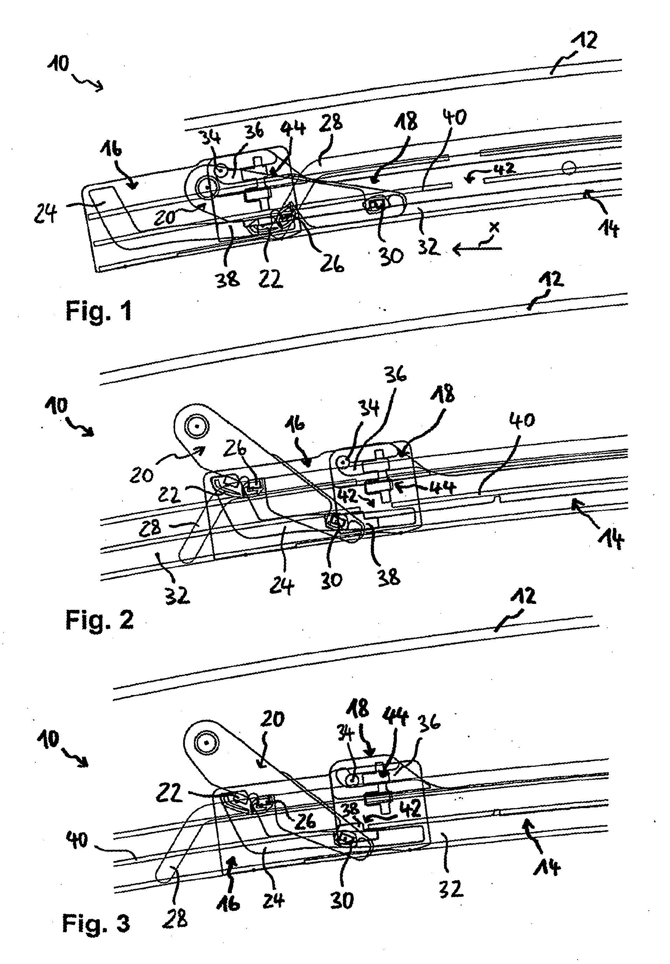

Fig. 1 zeigt einen vorderen Bereich einer insgesamt mit 10 bezeichneten Verstellvorrichtung für einen Schiebedachdeckel 12 an einem Kraftfahrzeug. Die Schieberichtung des Deckels 12, gleichzeitig Fahrzeuglängsrichtung, ist in der Figur durch einen Pfeil x angegeben.

Dargestellt und nachfolgend beschrieben sind der Einfachheit der Darstellung halber lediglich auf einer Seite des Deckels 12 angeordnete Vorrichtungskomponenten, die in an sich bekannter Weise tatsächlich an beiden Deckelseiten vorhanden sind.

Die Verstellvorrichtung 10 umfasst (auf jeder Deckelseite) eine in Längsrichtung x verlaufende fahrzeugfeste Führungsschiene 14 zur Führung eines (vorderen) ersten Gleiters 16 und eines (hinteren) zweiten Gleiters 18.

Die Gleiter 16, 18 dienen zur Steuerung sämtlicher Bewegungen des Schiebedachdeckels 12, der in der in Fig. 1 dargestellten Situation einen nicht dargestellten Dachausschnitt (Dachöffnung) des Kraftfahrzeugdaches verschließt. In dieser Schließstellung ist der Deckel 12 etwa bündig zu der (nicht dargestellten) Fahrzeugdachkontur angeordnet.

Ausgehend von der Schließstellung kann der Deckel 12 zunächst angehoben werden (Lüftungsstellung) und sodann nach hinten (in Fig. 1 nach rechts) über einen festen Dachhautabschnitt verschoben werden. Der Deckel 12 ist hierfür beiderseits jeweils über zwei Ausstellhebel angebunden, die jeweils im Bereich der Führungsschiene 14 fahrzeugseitig angelenkt sind. Der vordere dieser beiden Ausstellhebel ist in Fig. 1 zu erkennen und mit 20 bezeichnet. Ein zweiter, weiter hinten (in Fig. 1 weiter rechts) angeordneter Ausstellhebel ist in dem in Fig. 1 dargestellten Bereich nicht ersichtlich.

Der erste Gleiter 16 ist als ein Gleitschlitten ausgebildet, der in an sich bekannter Weise durch ein daran angreifendes, in einem Kanal der Führungsschiene 14 laufendes drucksteifes Antriebskabel entlang der Führungsschiene 14 in Richtung x verfahrbar ist.

Wenn dieser erste Gleiter 16 ausgehend von seiner in Fig. 1 dargestellten vorderen Endposition mittels des Antriebskabels nach hinten bewegt wird, so bewirkt dies ein Ausstellen des mit seinem vorderen Ende an einem (nicht dargestellten) Deckelträgers angelenkten Ausstellhebels 20, so dass der Deckel 20 im dargestellten Bereich nach oben angehoben wird.

Dieser Zustand ist als eine erste Zwischenstellung in Fig. 2 dargestellt.

Die Art und Weise, wie die Ausstellbewegung des Deckels 12 bewirkt wird, ist nicht Gegenstand der vorliegenden Erfindung und könnte daher auch in beliebig anderer geeigneter Weise vorgesehen sein.

Im dargestellten Ausführungsbeispiel wird das Ausstellen des Ausstellhebels 20 infolge der Bewegung des ersten Gleiters 16 dadurch bewerkstelligt, dass drei seitlich vom Ausstellhebel 20 abstehende Gleitstücke in drei verschiedenen Führungsbahnen laufen. Ein vorderes Gleitstück 22 der Hebels 20 läuft in einer Kulisse 24 des ersten Gleiters 16, ein mittleres Gleitstück 26 des Hebels 20 läuft in einer Kulisse 28 der Führungsschiene 14, und ein hinteres Gleitstück 30 des Hebels 20 läuft in einem Führungskanal 32 der Führungsschiene 14.

Fig. 3 zeigt eine zweite Zwischenstellung der Bewegung des Gleiters 16 nach hinten.

Über den in den Fig. 1 bis 3 dargestellten Teil seines Bewegungsbereiches nimmt der erste Gleiter 16 (Antriebsschlitten) den zweiten Gleiter 18 zwangsweise mit nach hinten.

Die hierfür erforderliche Mitnahmekopplung ist durch den Eingriff eines seitlich am ersten Gleiter 16 abstehenden Steuerbolzens 34 in einen schräg verlaufenden Abschnitt einer Steuerkulisse 36 bewerkstelligt, die am zweiten Gleiter 18 ausgebildet ist.

Bei der Bewegung des ersten Gleiters und somit des Steuerbolzens 34 drückt der Steuerbolzen 34 die Kulisse 36 und somit den zweiten Gleiter 18 synchron zur Bewegung des ersten Gleiters 16 nach hinten. In einem ersten Teil dieses Bewegungsablaufs (vgl. Fig. 1 und 2) kann der Steuerbolzen 34 hierbei nicht relativ zur Führungskulisse 36 (schräg nach unten) bewegt werden, da der Kulissenbereich 36 des zweiten Gleiters 18 in dieser Bewegungsphase in seiner Höhe bezüglich der Führungsschiene 14 festgelegt ist. Diese Festlegung ist realisiert durch eine in den Figuren mit 38 bezeichnete Riegelkontur (Arretierelement), die seitlich vom zweiten Gleiter 18 absteht und im Führungskanal 32 der Führungsschiene 14 läuft. Der Führungskanal 32 ist nach oben hin durch einen Führungsschienensteg 40 (einer von mehreren solchen Stegen der Führungsschiene) begrenzt. Erst wenn die zur Mitnahme gekoppelten Gleiter 16, 18 die in Fig. 3 dargestellte Position erreicht haben, kann der Steuerbolzen 34 in der Steuerkulisse 36 verfahren, da in dieser Position die Riegelkontur 38 in eine Aussparung 42 der Führungsschiene 14 nach oben einrastet. Der in den Fig. 1 bis 3 ersichtliche Teil des zweiten Gleiters 18 ist als ein verschwenkbarer "Riegelhebel" (mit der Riegelkontur 38 an seinem freien Ende) ausgebildet, wobei die Verschwenkungsachse in den Figuren nicht dargestellt ist und etwa am rechten Rand von Fig. 1 in Querrichtung verläuft. Ein entsprechendes Schwenklager des zweiten Gleiters 18 ist in Richtung x verschiebbar von der Führungsschiene 14 geführt.

Wenngleich beim Übergang von Fig. 2 nach Fig. 3 genau genommen eine Verschwenkungsbewegung (mit geringfügiger Translation) des zweiten Gleiters 18 erfolgt, so kann diese Bewegung, je nach Abstand des Schwenklagers, näherungsweise als eine Höhenverstellung betrachtet werden.

Mit dem Erreichen der in Fig. 3 dargestellten Zwischenstellung ist erstens die Mitnahmekopplung der beiden Gleiter 16, 18 beendet (da der Steuerbolzen 34 in einen längsverlaufenden Abschnitt der Steuerkulisse 36 eintritt) und zweitens der zweite Gleiter 18 in seiner Position entlang der Führungsschiene arretiert (durch den Eingriff der Riegelkontur 38 in die Führungsschienenaussparung 42).

Bei der weiteren Bewegung des ersten Gleiters 16 nach hinten wird nun der zweite Gleiter 18 in seiner durch die Aussparung 42 vorgegebenen Position zurückgelassen. Dieser Teil des Bewegungsbereiches des ersten Gleiters 16 ist für die Verschiebung des Schiebedachdeckels 12 nach hinten über die feste Dachhaut vorgesehen. Solange sich bei dieser weiteren Bewegung der Steuerbolzen 34 noch im Eingriff mit der Steuerkulisse 36 des zweiten Gleiters 18 befindet, ist die höhenmäßige Position des dargestellten Abschnitts des Gleiters 18 und somit die Arretierung des Gleiters 18 sichergestellt.

Da der Steuerbolzen 34 jedoch bei der weiteren Bewegung die in Richtung x relativ kurz bemessene Steuerkulisse 36 verlässt, wird bei der Verstellvorrichtung 10 unmittelbar vor diesem Verlassen die höhenmäßige Festlegung des zweiten Gleiters 18 und somit die Arretierung des Gleiters 18 durch einen besonderen Verriegelungsmechanismus gesichert.

Der Verriegelungsmechanismus ist im Wesentlichen von einem am zweiten Gleiter 18 gelagerten, um eine Hochachse drehbaren Drehriegel 44 gebildet. Wesentlich ist hierbei, dass der Drehriegel 44 beim Zurücklassen des zweiten Gleiters 18, nach der Höhenverstellung des dargestellten Abschnitts des zweiten Gleiters 18, in eine die Arretierung verriegelnde Drehstellung gedreht wird. Diese Verdrehung wird im dargestellten Ausführungsbeispiel durch eine Einwirkung des Steuerbolzens 34 auf eine von zwei radial vom Drehriegel 44 abstehenden Steuernocken 46, 48 realisiert.

Diese zum Verriegeln (und Entriegeln) vorgesehene Mechanik ist aus den nachfolgend beschriebenen Figuren besser ersichtlich.

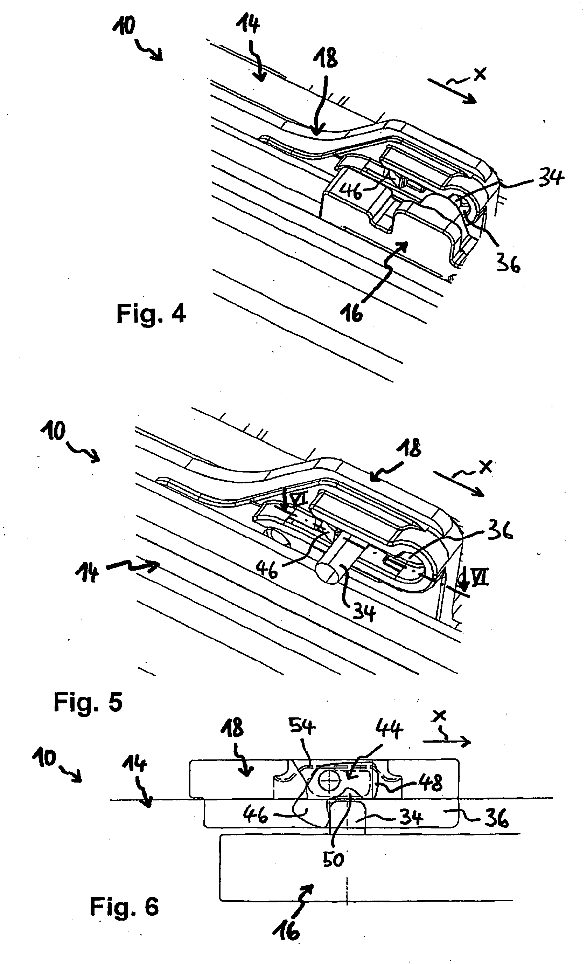

Fig. 4 ist eine perspektivische Ansicht (von innen) in welcher deutlich wird, wie der Steuerbolzen 34 des angetriebenen Gleiters 16 in die Steuerkulisse 36 des zweiten Gleiters 18 eingreift. Die in Fig. 4 dargestellte Situation entspricht der in Fig. 3 dargestellten Situation (zweite Zwischenstellung).

Ferner erkennt man in Fig. 4 eine erste Steuernocke 46 der beiden Steuernocken 46, 48, die in der dargestellten Situation in die Steuerkulisse 36 seitlich hineinragt.

Die Fig. 5 und 6 zeigen perspektivisch bzw. in einem Schnitt eine dritte Zwischenstellung im Bewegungsablauf, bei welcher der Steuerbolzen 34 gegen die erste Steuernocke 46 anläuft. Der Klarheit der Darstellung halber ist in Fig. 5 vom ersten Gleiter 16 lediglich der Steuerbolzen 34 eingezeichnet.

Im weiteren Bewegungsablauf weicht nun die Steuernocke 46 dem dagegen anlaufenden Steuerbolzen 34 aus, so dass der Drehriegel 44 (in Fig. 6 im Uhrzeigersinn) verdreht wird.

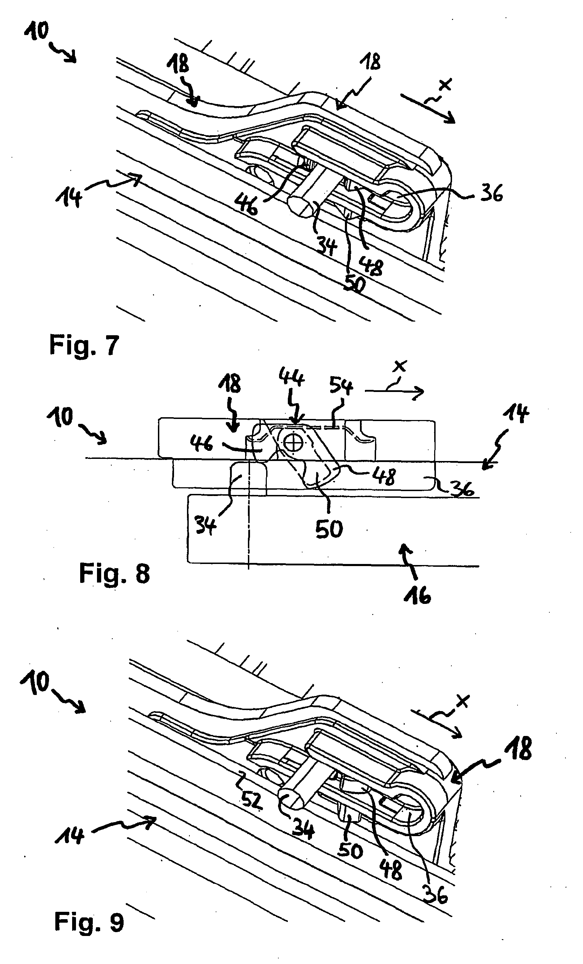

Es ergibt sich eine vierte Zwischenstellung, die in Fig. 7 gezeigt ist. In dieser Figur ist auch die zweite Steuernocke 48 bereits ersichtlich, die in diesem Stadium in den Raum der Steuerkulisse 36 hineinschwenkt.

Bei Erreichen der in Fig. 8 gezeigten fünften Zwischenstellung ist der Verriegelungsvorgang abgeschlossen. Im dargestellten Ausführungsbeispiel wurde der Drehriegel 44 hierfür um etwa 50° verdreht.

Wie es aus den Fig. 6 bis 9 ersichtlich ist, weist der Drehriegel 44 ferner eine radial abstehende Riegelnocke 50 auf, die in Axialrichtung versetzt zu der Steuemockenanordnung 44, 46 und in Umfangsrichtung betrachtet etwa in der Winkelposition der zweiten Steuernocke 48 vorgesehen ist.

In Fig. 9 befindet sich die Riegelnocke 50 in einem Bereich in Höhenrichtung betrachtet zwischen einer Fläche 52 der Führungsschiene 14 und einem die Steuerkulisse 36 begrenzenden Abschnitt des zweiten Gleiters 18, so dass die in Fig. 9 ersichtliche, durch den Steuerbolzen 34 angesteuerte Höhenverstellung des zweiten Gleiters 18 auch dann weiterhin sichergestellt ist, wenn im weiteren Bewegungsablauf der Steuerbolzen 34 die Steuerkulisse 36 verlässt (in Fig. 9 nach links). Mit der verschwenkten Riegelnocke 50 wird somit eine einfache und zuverlässige Verriegelung des zweiten Gleiters 18 im arretierten Zustand realisiert.

Bemerkenswert ist hierbei zum einen, dass die zum Verriegeln notwendige Drehung des Drehriegels 44 ohne nennenswerten Kraftaufwand mittels des Steuerbolzens 34 bewerkstelligt werden kann und dass jegliche im Betrieb, insbesondere während der Fahrt des betreffenden Fahrzeugs, auftretende Kräfte, die den zweiten Gleiter 18 nach unten zu drücken versuchen, zuverlässig von der Riegelnocke 50 aufgenommen werden, die sich wiederum an der Führungsschiene 14 abstützt. Solche Kräfte werden darüber hinaus vorteilhaft von den übrigen Komponenten der Verstellvorrichtung 10 ferngehalten.

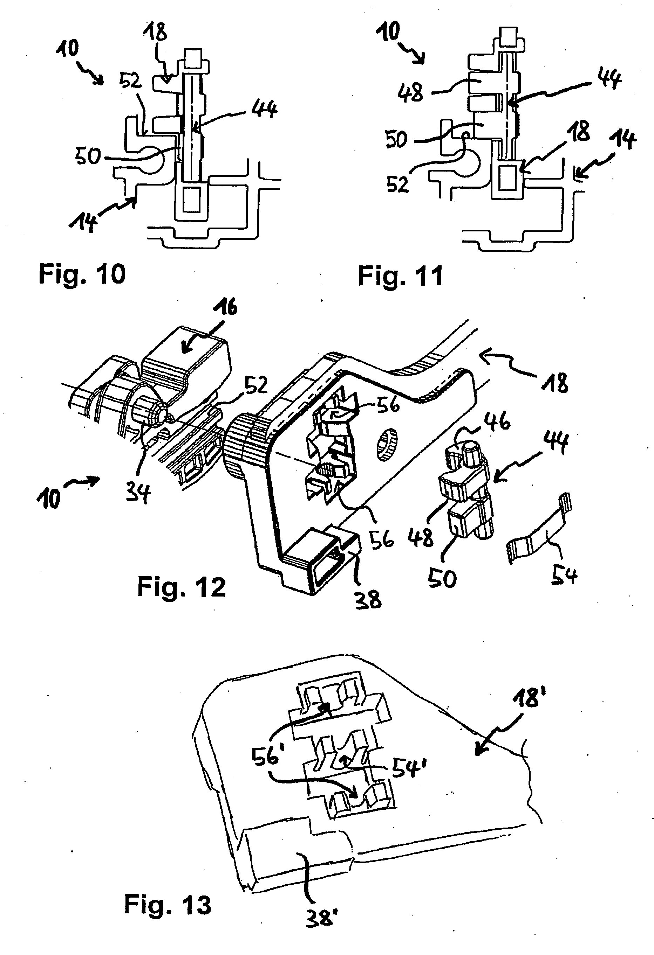

Die Fig. 10 und 11 veranschaulichen nochmals jeweils in einer Querschnittsansicht den entriegelten Zustand (Fig. 10) bzw. den verriegelten Zustand (Fig. 11). Daraus ist ersichtlich, dass die Riegelnocke 50 zum Verriegeln in einen axialen Freiraum zwischen der Führungsschiene 14 und dem zweiten Gleiter 18 hineingeschwenkt wird, der erst durch die vorangegangene Höhenverstellung des zweiten Gleiters 18 (in Fig. 10 und 11 nach oben) geschaffen wurde.

Der oben beschriebene Bewegungsablauf findet in umgekehrter Reihenfolge beim Schließen des Schiebedachdeckels 12 statt.

Was den in diesem umgekehrten Bewegungsablauf stattfindenden Entriegelungsvorgang anbelangt, so ist beispielsweise aus Fig. 8 ersichtlich, dass die im verriegelten Zustand in die Steuerkulisse 36 ragende zweite Steuernocke 48 bei dieser Bewegung von dem Steuerbolzen 34 verdrängt wird, so dass der Drehriegel 44 in seine Ausgangsdrehstellung (vgl. Fig. 6) zurückgedreht wird.

Fig. 12 zeigt nochmals in einer Explosionsdarstellung einige der oben bereits beschriebenen Vorrichtungskomponenten. Hierbei ist auch eine Blattfeder 54 dargestellt, welche im montierten Zustand einerseits eine rastende Anbindung des Drehriegels 44 an einer Schnappaufnahme 56 des zweiten Gleiters 18 sichert und zum anderen den Drehriegel 44 sowohl in seiner Verriegelungsdrehstellung als auch seiner Entriegelungsdrehstellung sichert. Letztere Drehsicherung ist an sich nicht erforderlich, stellt jedoch besonders zuverlässig sicher, dass der Drehriegel 44 nach einer Betätigung durch den Steuerbolzen 34 zuverlässig in eine seiner beiden Enddrehstellungen gelangt und verbleibt. Diese Wirkung der Feder 54 auf den Drehriegel 44 wird durch zwei in Umfangsrichtung geeignet angeordnete Abflachungen am Drehriegelschaft erreicht, an welchem die Feder 54 im montierten Zustand anliegt (vgl. auch Fig. 6 und 8).

Fig. 13 veranschaulicht schließlich eine Abwandlung der soeben beschriebenen Sicherung der Drehstellung des Drehriegels 44. Gemäß dieser Modifikation ist ein zweiter Gleiter 18' mit einer Riegelkontur 38' und einer Schnappaufnahme 56' zur Aufnahme eines Drehriegels der bereits beschriebenen Art vorgesehen. Im Unterschied zu der in Fig. 12 dargestellten Ausführung ist jedoch zusätzlich ein gabelartig ausgebildeter Vorsprung 54' des in diesem Bereich aus Kunststoff gebildeten zweiten Gleiters 18' vorgesehen, dessen beide "Gabelzinken" elastisch gegen entsprechende Abflachungen am Schaft des montierten Drehriegels anliegen und somit die Funktion der Sicherung der Drehstellung übernehmen.

### Bezugszeichenliste

- 10: Verstellvorrichtung
- 12: Schiebedachdeckel
- 14: Führungsschiene
- 16: erster Gleiter (Antriebsschlitten)
- 18: zweiter Gleiter
- 20: Ausstellhebel
- 22: Gleitstück
- 24: Kulisse
- 26: Gleitstück
- 28: Kulisse
- 30: Gleitstück
- 32: Führungskanal (Kulisse)
- 34: Steuerbolzen
- 36: Steuerkulisse
- 38: Riegelkontur
- 40: Führungsschienensteg
- 42: Führungsschienenaussparung
- 44: Drehriegel
- 46: erste Steuernocke
- 48: zweite Steuernocke
- 50: Riegelnocke
- 52: Führungsschienenfläche
- 54: Feder
- 56: Schnappaufnahme

## Patentansprüche

1. Verstellvorrichtung für einen Schiebedachdeckel (12) an einem Fahrzeug, umfassend eine in Längsrichtung (x) verlaufende fahrzeugfeste Führungsschiene (14) zur Führung von ersten und zweiten, in Längsrichtung (x) hintereinander angeordneten, die Bewegung des Schiebedachdeckels (12) steuernden Gleitern (16, 18),
wobei der erste Gleiter (16) mittels einer Antriebseinrichtung entlang der Führungsschiene (14) bewegbar ist und über einen Teil seines Bewegungsbereiches den zweiten Gleiter (18) mitnimmt und über einen anderen Teil seines Bewegungsbereiches den zweiten Gleiter in einer vorgegebenen Position entlang der Führungsschiene (14) zurücklässt,
wobei am zweiten Gleiter (18) ein durch den ersten Gleiter (16) gesteuert höhenverstellbares Arretierelement (38) angeordnet ist, welches beim Zurücklassen des zweiten Gleiters (18) durch eine Höhenverstellung in eine Formschlussverbindung mit einem Führungsschienenabschnitt (42) gebracht wird, um den zweiten Gleiter (18) an der Führungsschiene (14) zu arretieren,
**dadurch gekennzeichnet, dass** am zweiten Gleiter (18) ferner ein durch den ersten Gleiter (16) gesteuert um eine Hochachse drehbarer Drehriegel (44) angeordnet ist, welcher beim Zurücklassen des zweiten Gleiters (18), nach der Höhenverstellung des Arretierelements (38), in eine die Arretierung verriegelnde Drehstellung gedreht wird.

2. Verstellvorrichtung nach Anspruch 1, wobei der Drehriegel (44) eine radial abstehende Riegelnocke (50) aufweist, die zum Verriegeln in einen durch die Höhenverstellung geschaffenen Freiraum zwischen einem mit dem Arretierelement (38) verbundenen Abschnitt des zweiten Gleiters (18) und einem Abschnitt (52) der Führungsschiene (14) schwenkt.

3. Verstellvorrichtung nach einem der vorangehenden Ansprüche, wobei der Drehriegel (44) zwei radial abstehende, zueinander winkelversetzte Steuernocken (46, 48) aufweist, mit denen ein seitlich abstehender Steuerbolzen (34) des ersten Gleiters (16) zum Drehen des Drehriegels (44) zusammenwirkt.

4. Verstellvorrichtung nach Anspruch 3, wobei der Steuerbolzen (34) des ersten Gleiters (16) mit einer Kulissenbahn (36) eines mit dem Arretierelement (38) verbundenen Abschnitts des zweiten Gleiters (18) zusammenwirkt, um die Höhenverstellung zu bewirken.

5. Verstellvorrichtung nach einem der vorangehenden Ansprüche, wobei der Drehriegel (44) in seiner Verriegelungsdrehstellung und/oder seiner Entriegelungsdrehstellung durch eine Federbelastung (54, 54') gesichert ist.

6. Verstellvorrichtung nach einem der vorangehenden Ansprüche, wobei der erste Gleiter (16) nach dem Zurücklassen des zweiten Gleiters (18) vollständig vom zweiten Gleiter (16) entkoppelt wird.

7. Verstellvorrichtung nach einem der vorangehenden Ansprüche, wobei das Arretierelement (38) an einem um eine Querachse verschwenkbaren Arretierhebel des zweiten Gleiters (18) angeordnet ist.

8. Verstellvorrichtung nach einem der vorangehenden Ansprüche, wobei das Arretierelement (38) seitlich vom zweiten Gleiter (18) absteht und während der Mitnahme des zweiten Gleiters (18) in einem durch einen horizontalen Führungsschienensteg (40) begrenzten Führungskanal der Führungsschiene läuft und bei Erreichen der vorbestimmten Position durch die Höhenverstellung in eine Aussparung (42) des Führungsschienenstegs (40) eindringt.

## Claims

1. Adjustment device for a sliding roof cover (12) on a vehicle, comprising a guide rail (14) which runs in the longitudinal direction (x), is mounted on the vehicle and is intended for guiding first and second sliders (16, 18) which are arranged consecutively in the longitudinal direction (x) and control the movement of the sliding roof cover (12),
wherein the first slider (16) can be moved along the guide rail (14) by means of a drive device and, over part of its movement range, carries along the second slider (18) and, over another part of its movement range, leaves the second slider behind in a predetermined position along the guide rail (14),
wherein an arresting element (38) which can be adjusted in height in a manner controlled by the first slider (16) is arranged on the second slider (18) and, when the second slider (18) is left behind, is brought by means of a height adjustment into a form-fitting connection with a guide rail section (42) in order to arrest the second slider (18) on the guide rail (14),
**characterized in that** a rotary latch (44) which can be rotated about a vertical axis in a manner controlled by the first slider (16) is furthermore arranged on the second slider (18) and, when the second slider (18) is left behind, and after the height adjustment of the arresting element (38), is rotated into a rotary position locking the arresting action.

2. Adjustment device according to Claim 1, wherein the rotary latch (44) has a radially protruding latching cam (50) which, for locking purposes, pivots into a clearance, which is created by the height adjustment, between a section of the second slider (18), which section is connected to the arresting element (38), and a section (52) of the guide rail (14).

3. Adjustment device according to one of the preceding claims, wherein the rotary latch (44) has two control cams (46, 48) which protrude radially, are offset in angle with respect to each other and with which a laterally protruding control bolt (34) of the first slider (16) interacts in order to rotate the rotary latch (44).

4. Adjustment device according to Claim 3, wherein the control bolt (34) of the first slider (16) interacts with a slotted guide track (36) of a section of the second slider (18), which section is connected to the arresting element (38), in order to bring about the height adjustment.

5. Adjustment device according to one of the preceding claims, wherein the rotary latch (44) is secured in its locking rotary position and/or in its unlocking rotary position by means of spring loading (54, 54').

6. Adjustment device according to one of the preceding claims, wherein, after the second slider (18) is left behind, the first slider (16) is completely decoupled from the second slider (18).

7. Adjustment device according to one of the preceding claims, wherein the arresting element (38) is arranged on an arresting lever, which can be pivoted about a transverse axis, of the second slider (18).

8. Adjustment device according to one of the preceding claims, wherein the arresting element (38) protrudes laterally from the second slider (18) and, during the carrying-along of the second slider (18), runs in a guide channel of the guide rail, which guide channel is bounded by a horizontal guide rail web (40), and, when the predetermined position is reached, penetrates by means of the height adjustment into a cutout (42) of the guide rail web (40).

## Revendications

1. Dispositif de réglage pour un couvercle de toit ouvrant (12) d'un véhicule, comprenant un rail de guidage (14) fixé au véhicule, s'étendant dans la direction longitudinale (x), pour le guidage de premier et deuxième coulisseaux (16, 18) commandant le déplacement du couvercle de toit ouvrant (12), disposés l'un derrière l'autre dans la direction longitudinale (x),
le premier coulisseau (16) pouvant être déplacé au moyen d'un dispositif d'entraînement le long du rail de guidage (14) et entraînant avec lui le deuxième coulisseau (18) sur une partie de sa plage de déplacement, et laissant en arrière le deuxième coulisseau (18) dans une position prédéfinie le long du rail de guidage (14) sur une autre partie de sa plage de déplacement,
un élément de blocage (38) réglable en hauteur et commandé par le premier coulisseau (16) étant disposé sur le deuxième coulisseau (18), et étant amené par un réglage en hauteur en connexion par engagement géométrique avec une portion de rail de guidage (42) lorsque le deuxième coulisseau (18) est laissé en arrière, afin de bloquer le deuxième coulisseau (18) sur le rail de guidage (14),
**caractérisé en ce qu'**un verrou rotatif (44) pouvant tourner autour d'un axe vertical et commandé par le premier coulisseau (16) est en outre disposé sur le deuxième coulisseau (18), lequel est tourné dans une position de rotation verrouillant le blocage lorsque le deuxième coulisseau (18) est laissé en arrière, après le réglage en hauteur de l'élément de blocage (38).

2. Dispositif de réglage selon la revendication 1, dans lequel le verrou rotatif (44) présente une came de verrouillage (50) saillant radialement, qui, pour le verrouillage dans un espace libre créé par le réglage en hauteur, pivote entre une portion du deuxième coulisseau (18) connectée à l'élément de blocage (38) et une portion (52) du rail de guidage (14).

3. Dispositif de réglage selon l'une quelconque des revendications précédentes, dans lequel le verrou rotatif (44) présente deux cames de commande (46, 48) décalées angulairement l'une par rapport à l'autre et saillant radialement, avec lesquelles coopère un boulon de commande (34), saillant latéralement, du premier coulisseau (16) pour faire tourner le verrou rotatif (44).

4. Dispositif de réglage selon la revendication 3, dans lequel le boulon de commande (34) du premier coulisseau (16) coopère avec une coulisse (36) d'une portion du deuxième coulisseau (18) connectée à l'élément de blocage (38), afin de provoquer le réglage en hauteur.

5. Dispositif de réglage selon l'une quelconque des revendications précédentes, dans lequel le verrou rotatif (44) est fixé dans sa position rotative de verrouillage et/ou dans sa position rotative de déverrouillage par une sollicitation par ressort (54, 54').

6. Dispositif de réglage selon l'une quelconque des revendications précédentes, dans lequel le premier coulisseau (16) est complètement désaccouplé du deuxième coulisseau (16) après que le deuxième coulisseau (18) a été laissé en arrière.

7. Dispositif de réglage selon l'une quelconque des revendications précédentes, dans lequel l'élément de blocage (38) est disposé sur un levier de blocage du deuxième coulisseau (18) qui peut pivoter autour d'un axe transversal.

8. Dispositif de réglage selon l'une quelconque des revendications précédentes, dans lequel l'élément de blocage (38) fait saillie latéralement depuis le deuxième coulisseau (18) et, pendant l'entraînement du deuxième coulisseau (18), passe dans un canal de guidage du rail de guidage limité par une nervure de rail de guidage horizontale (40), et une fois que la position prédéterminée a été atteinte par le réglage en hauteur pénètre dans un évidement (42) de la nervure du rail de guidage (40).
